# NEUE EUROPÄISCHE PATENTSCHRIFT

(11) **EP 0 228 500 B2**
(45) Veröffentlichungstag und Bekanntmachung des Hinweises auf die Entscheidung über den Einspruch: **28.12.1994**
(45) Hinweis auf die Patenterteilung: 18.09.1991
(21) Anmeldenummer: 86104027.7
(22) Anmeldetag: 24.03.1986
(51) Int. Cl.: G01B 11/24

(54) **Verfahren und Einrichtung zur berührungslosen Vermessung des Radprofils der Räder von Eisenbahnradsätzen**
Method of and device for contactless measurement of the wheel profile of the wheels of railway wheel sets
Méthode et dispositif pour la mesure sans contact du profil d'une roue des roues d'ensembles de roues de voie ferrée

(30) Priorität: 12.08.1985 DE 3528873
(43) Veröffentlichungstag der Anmeldung: 15.07.1987
(73) Patentinhaber: Wilhelm Hegenscheidt Gesellschaft mbH, D-41804 Erkelenz (DE)
(72) Erfinder: Schmalfuss, Harald, Dipl.-Phys., D-6054 Rodgau 3 (DE); Sinsel, Friedel, D-6000 Frankfurt 50 (DE); Kurpiella, Hubertus, Dipl.-Ing., D-6236 Eschborn (DE); Schondorff, Ulrich, D-5140 Erkelenz (DE)
(74) Vertreter: Mayer-Pohske, Joachim-Wolfgang Rechtsanwälte Dr. Dettmeier & Partner

(56) Entgegenhaltungen:
- EP-A- 0 007 227
- DE-A- 3 337 251
- DE-C- 2 513 389
- MESSEN + PRUEFEN / AUTOMATIK, Band 20, Heft 6, Juni 1984, Seiten 312-316, Frankfurt; G. SEGER et al.: "Qualitätskontrolle durch automatisierte Sichtprüfung"

## Beschreibung

Die Erfindung betrifft ein Verfahren zur berührungslosen Vermessung des Radprofils der Räder von Eisenbahnradsätzen, bei denen das Profil mindestens teilweise beleuchtet wird, wobei das sich durch die Beleuchtung ergebende Profilbild in Kontur von mindestens einer Abbildungsoptik erfaßt und über eine Digitalisierungseinrichtung einer Auswerteeinrichtung zur Auswertung zugeleitet wird, sowie eine Einrichtung zur Durchführung des Verfahrens.

Verfahren der eingangs beschriebenen Art, sowie Einrichtungen zur Durchführung des Verfahrens sind im Stand der Technik seit langem bekannt. Es handelt sich hierbei um die sogen. optischen Meßstände, die in der Welt weitverbreitet im Einsatz sind und sich hervorragend bewährt haben. Bei diesen Einrichtungen wird zur Erfassung des Radprofils der Räder eines Eisenbahnradsatzes der Eisenbahnradsatz ausgebaut. zum Meßstand transportiert und dort angehoben und zwischen Körnerspitzen aufgenommen. Das Profil jeden Rades wird dann tangential mit einem planparallelen Lichtbündel beleuchtet und ein vom Profil erzeugtes Schattenbild mit einem als Profillinie vorgegebenen Sollprofil verglichen und es werden die Abweichungen festgestellt und der Beurteilung des Profiles zugrundegelegt. Solche Einrichtungen stehen in sogen. Radsatzaufarbeitungswerkstätten. Sie können jedoch trotz ihrer guten Funktion und ihrer ausgezeichneten Prüfergebnisse nicht bei einer automatisierten prophylaktischen Prüfung von Radsätzen verwendet werden.

Mit der EP-A-007227 ist eine Einrichtung der gattungsgemäßen Art bekannt geworden. Mit einer solchen Einrichtung kann ein Schienenprofil in einem spitzen Winkel zu seiner Längserstreckung beleuchtet und entsprechend verzerrt über eine Abbildungsoptik einer Auswerteeinrichtung zugeführt werden. Eine solche Anordung ist für die Vermessung eines Profils eines vollenden Eisenbahnrades ungeeignet, weil die verschlissenen Profile der Räder von Eisenbahnradsätzen eine sehr unterschiedliche Kontur aufweisen, so daß die bei einer solchen Anordnung auftretende starke Verzerrung nicht mehr herausgerechnet werden kann.

Der Erfindung liegt somit die Aufgabe zugrunde, ein Verfahren der eingangs beschriebenen Art vorzuschlagen, mit dem es möglich ist, Radsätze in ihrem Radprofil automatisch zu vermessen. Hierbei soll als Meßergebnis zunächst ein Befund "gut/nicht gut" erreicht werden, wobei im Falle des Ergebnisses "nicht gut" die Fehlerdaten so angegeben werden, daß sie für eine nachfolgende Wiederaufbereitung verwendet werden können. Weiterhin soll nach der Erfindung eine Einrichtung zur Durchführung des genannten Verfahrens vorgeschlagen werden.

Verfahrensmäßig ist diese Aufgabe, mit den Merkmalen des Anspruchs 1 gelöst.

Beleuchtungseinrichtungen, die einen Lichtschnitt oder eine Lichtkante auf einer beleuchteten Oberfläche erzeugen, sind bekannt und es ist ebenfalls bekannt, das bei einer solchen Beleuchtung erkennbar werdende Oberflächenprofil über eine Kamera zu erfassen und auszuwerten. Hierzu sei hingewiesen auf den Aufsatz "Qualitätskontrolle durch automatisierte Sichtprüfung" aus Messen und Prüfen, Sonderdruck aus Band 20 (1984), Heft 6. Die hierdurch bekannten Verfahrensweisen und die zur Durchführung entwickelten Vorrichtungen haben jedoch immer nur ein stationär angeordnetes Objekt vermesen. Hierbei wurde ein sich gerade erstreckendes Werkstück entlang seiner Längserstreckung an unterschiedlichen Stellen hinsichtlich seines sich quer zur Längsrichtung verlaufenden Profils abgetastet.

Die vorgeschlagenen Maßnahmen der Erfindung hingegen ermöglichen in ihrer Kombination die Vermessung des Profiles jedes Rades eines Radsatzes auch in eingebautem Zustand und während seiner Bewegung auf der Schiene. Da durch die genannte Maßnahme auch die Seitenlage der Profile zueinander bekannt ist, kann auch deren Lateralabstand maßlich festgelegt werden mittels der Auswerteeinrichtung.

Der Radsatz wird mit jedem Rad entlang der Meßstrecke abgerollt und eine definierte Meßposition. in der die Messung erfolgen soll, geführt werden. In dieser Meßposition, deren Erreichen festgestellt werden muß, kann dann jedes Rad etwa radial von den bereits bekannten Beleuchtungseinrichtungen zur Erzeugung eines Lichtschnittes oder einer Lichtkante beieuchtet werden, vorzugsweise als Blitzlicht und es kann dann mindestens eine auf diese Blitzbeleuchtung synchronisierte Abbildungsoptik mit Digitalisierungseinrichtung das erscheinende Profil aufnehmen und den bereits bekannten Weiterverarbeitungselektroniken zuführen. Das Ergebnis dieser Weiterverarbeitung kann dann angezeigt, dokumentiert oder den Steuerungen weiterer Maschinen zugeführt werden. Damit gelingt es auch erstmals die Räder eines Radsatzes unausgebaut und im Schienenstrang in ihrem Profilzustand zu vermessen. Es kann auch eine einzelne Abbdungsoptik auf mehrere Arrays von Sensoren einwirken, welche mit einer gemeinsamen Treiberelektronik zusammenwirken. Die Treiberelektronik kann vom Sensorkopf räumlich getrennt sein, jedoch elektronisch verbunden. Die Sensoren wirken als Digitalisierungseinrichtung, wobei der Schaltzustand der Sensoren von der Treiberelektronik gelesen und weitergeleitet wird.

Nach einer Ausgestaltung des Verfahrens wird vorgeschlagen, daß die Beleuchtung unter einem spitzen Winkel zur Bewegungsrichtung eines Rades durch die Meßstrecke erfolgt. Hierdurch gelingt es einerseits. Beleuchtungseinrichtung und Abtastrichtung in einen solchen Winkel zueinander zu bringen, daß eine Profilverzerrung weitgehend vermieden wird und somit vom Rechner nicht mehr ausgeglichen werden muß und es gelingt hierdurch gleichzeitig den Bereich, in dem die Messung erfolgen muß, also die Meßposition, zu vergrößern, so daß die Positioniergenauigkeit auf die Meßposition größer sein kann. Bei dieser Anordnung der Beleuchtung ist es sehr einfach möglich bei nicht vollständig diffus reflektierender Oberfläche die Lichtausbeute auf dem Empfänger zu verbessern, weil jeder Winkel kleiner als 90 in einem großen Bereich gewählt werden kann.

Nach einer Alternativen der Erfindung ist vorgeschlagen, daß die Beleuchtung rechtwinklig zur Bewegungsebene erfolgt. Eine solche Beleuchtungsrichtung bietet verschiedene konstruktive Vorteile.

Es ist weiterhin nach der Erfindung noch vorgeschlagen, daß eine Lichtschnittbeleuchtung verwendet wird, wobei sich das durch die Beleuchtung ergebende Profilbild beidseitig zu einer Radialebene in der das Profilbild liegt von je mindestens einer Abbildungsoptik erfaßt und über eine Digitalisierungseinrichtung einer Auswerteeinrichtung zur Auswertung zugeleitet wird. Nur bei der Lichtschnittbeleuchtung ist eine beidseitige Erfassung des sich ergebenden Profilbildes einfach möglich, wobei die beidseitige Erfassung es erlaubt, zwischen den beiden erfaßten Profilbildern, sofern diese nicht deckungsgleich sind, zu interpolieren. Hierdurch kann ein Positionsfehler des vermessenen Rades bei der Aufnahme wieder ausgeglichen werden.

Es wird weiterhin nach der Erfindung noch vorgeschlagen, daß in einem Meßbereich in einer schnellen Folge hintereinander alle Abbildungsoptiken mehrere Profilaufnahmen durchführen, die je über eine Digitalisierungseinrichtung der Auswerteeinrichtung zugeführt werden. die das Profil mit der geringsten Verzerrung auswählt und falls nötig extrapoliert oder zwischen zwei Profilen mit geringster Verzerrung interpoliert. Dieses Verfahren kann sowohl bei Lichtschnittbeleuchtung und doppelseitiger oder einseitiger Aufnahme, als auch Lichtkantenbeleuchtung mit einseitiger Aufnahme durchgeführt werden. Durch die verschiedenen Verzerrungsgrade des Profils kann auf die Positionsgenauigkeit des Rades relativ zur exakten Meßposition rückgeschlossen werden und es kann das Bild, das in der erkennbar besten Position aufgenommen wurde, für die Auswertung oder Interpolation verwendet werden.

Es ist weiterhin nach der Erfindung noch vorgeschlagen, daß eine Lichtschnittbeleuchtung verwendet wird, wobei jede Abbildungsoptik kurz hintereinander mindestens zwei Profilaufnahmen macht, bevor die hierdurch in der Digitalisierungseinrichtung entstandenen Werte ausgelesen und der Auswerteeinrichtung zugeleitet werden. Es handelt sich hierbei um eine Mehrfachbelichtung einer Empfängerfläche oder Abbildungsebene jeder verwendeten Abbildungsoptik, wodurch der Zeitabstand zwischen zwei Aufnahmen praktisch beliebig verkürzt werden kann. Bei dieser Verfahrensweise muß nicht mehr das Auslesen der Digitalwerte der ersten Aufnahme abgewartet werden, um wieder aufnahmebereit zu sein, sondern es wird vielmehr in nahezu beliebig kurzer Zeit hintereinander eine Mehrfachbelichtung möglich, und erst danach werden die Werte ausgelesen. Dies ist insbesondere bei der Lichtschnittbeleuchtung möglich, weil diese eine helle Kontur als Linie erzeugt und nicht die Linie durch einen Hell-Dunkelkontrast bildet. Eine Doppelbelichtung erzeugt somit zwei klar definierte Linien auf der genannten Empfängerfläche. Die schnelle Bildfolge ermöglicht eine genauere Auslese der richtigen Position des zu vermessenden Rades.

Weiterhin ist nach der Erfindung vorgeschlagen, daß das Profil aus zwei in Richtung der Radsatzachse versetzten, synchronisierten Beleuchtungsquellen beleuchtet wird. Hierdurch wird insbesdondere bei den Radsatzprofilen jede Schattenwirkung, beispielsweise des Spurkranzes, vermieden und gleichzeitig eine vollständige Beleuchtung des Profiles erreicht.

Einrichtungsmäßig ist die Aufgabe gelöst mit den Merkmalen des Anspruchs 8. Mit einem solchen Aufbau der erfindungsgemäßen Einrichtung wird es möglich, Meßelemente und zu messendes Objekt in die richtige relative Lage zueinander zu bringen und zu halten und in dieser richtigen Lage zu messen. Das Ergebnis der Messung wird über die Abbildungsoptik einer in der Abbildungsebene der Abbildungsoptik liegenden Sensorplatte als Digitalisierungeinrichtung zugeleitet, so daß die ankommenden Analogsignale dort in Digitalsignale verwandelt werden. Diese Digitalsignale werden an eine Auswerteeinrichtung weitergeleitet. Der geeignete radiale Abstand zur Umfangsfläche des Rades liegt etwa da, wo sich die optische Achse der Abbildungsoptik mit der Beleuchtungsrichtung der Beleichtungseinrichtung schneidet. Dieser Radialabstand kann jedoch soweit verändert werden, als von der Abbildungsoptik auf der zur Verfügung stehenden Abbildungssebene noch ein ausreichendes Analogbild abgebildet wird.

Eine solche Einrichtung kann als Teil eines Gleises, welches von einem vollständigen Zug oder auch nur von einem einzelnen Wagen passiert wird, vorgesehen sein. Während jeder einzelne Radsatz eines solchen Zuges oder eines Wagens die Maßstrecke durchläuft, wird im Bereich der Hilfsschiene in vorher festgelegter Meßposition das Profil jedes Rades des Radsatzes radial so beleuchtet, daß ein bekannter Lichtschnitt oder eine bekannte Lichtkante entsteht. In bekannter Relation zu dieser Lichtkante oder dem Lichtschnitt ist mindestens eine Abbildungsoptik zur Aufnahme des sich ergebenden Profilbildes angeordnet. In der Meßposition kann Abbildungsoptik mit Digitalisierungseinrichtung, und Beleuchtungseinrichtung synchronisiert sein, so daß die Beleuchtungseinrichtung die Beleuchtung in Form eines Lichtblitzes vornimmt und gleichzeitig die Abbildungsoptik in der richtigen Zeitfolge das entstehende Bild aufnimmt. Es ist aber auch denkbar, eine Dauerbeleuchtung vorzusehen und nur z. B. die Abbildungsoptik oder die Digitalisierungseinrichtung in der richtigen Meßposition des Rades für den notwendigen kurzen Zeitraum für die Aufnahme zu aktivieren. Die Mittel zur Erfassung der Meßposition können die gewünschte Schaltung auslösen. Ober die Verbindung Digitalisierungseinrichtung mit einer Auswerteeinrichtung wird das Analogbild der Abbildungsoptik digitalisiert, mit einem im Rechner oder in der Auswerteeinrichtung gespeicherten Sollprofil verglichen und es wird die Differenz zum Sollprofil festgestellt. Eine Ausgabeeinheit gibt dann einen "gut-Befund" oder bei Bedarf Zahlenwerte oder Werte für eine Dokumentation oder für eine Weiterverarbeitung in einer weiteren Maschinensteuerung. Gleichzeitig oder einzeln kann das Ergebnis auch in Form einer Kurve ausgeschrieben oder auf einem Bildschirm angezeigt werden.

In einer Ausgestaltung wird vorgeschlagen, daß mindestens die Abbildungsoptik so lageveränderlich ist, daß der Schnittpunkt ihrer optischen Achse mit dem Lichtstrahl der Beleuchtungseinrichtung veränderbar ist derart, daß er auf die Radumfangsfläche einstellbar ist. Hierdurch kann ein bestimmter gewünschter Radialabstand vorjustiert werden.

Eine andere Ausgestaltung der Erfindung sieht vor, daß die Abbildungsoptik und die Digitalisierungseinrichtung Elemente einer elektronischen Kamera sind. Kameras solcher Art sind im Handel erhältlich und arbeiten zuverlässig.

Nach einer Ausgestaltung der Erfindung ist vorgesehen, daß die Beleuchtungseinrichtung so angeordnet ist und ausgebildet ist, daß sie das Profil des Rades unter einem spitzen Winkel zu dessen Bewegungsrichtung anleuchtet. Hierdurch kann die Anforderung an die Positioniergenauigkeit verringert werden.

Eine weitere Ausgestaltung der Erfindung sieht vor, daß Beleuchtungseinrichtung und Kamera verstellbar auf einer Trageinrichtung angeordnet sind, wobei Beleuchtungseinrichtung und Kamera relativ zum Radsatz verfahrbar sein können. Hierdurch kann die Einrichtung den verschiedenen Bedürfnissen an die Beleuchtungsund Aufnahmerichtung angepaßt werden und es kann bei nicht vertikaler Beleuchtungsrichtung die Einrichtung auf unterschiedliche Durchmesser eingestellt werden.

Eine andere Ausgestaltung der Erfindung wiederum sieht vor, daß Mittel vorgesehen sind, die den das Profil beleuchtenden Lichtstrahl vertikal zur Bewegungsebene und von unten gegen das Profil führen. Diese Beleuchtungsrichtung hat konstruktive Vorteile. Die angegebenen Mittel, die für die richtige Beleuchtungsrichtung sorgen, erlauben gleichzeitig, die Lichtquelle an aus konstruktiven Gründen gewünschter Stelle unterzubringen.

Wiederum eine Ausgestaltung der Erfindung sieht vor, daß unterhalb der Bewegungsebene für jedes Rad eine Beleuchtungseinrichtung zur Erzeugung eines Lichtschnittes mit vertikal gegen das Profil gerichtetem Lichtstrahl vorgesehen ist, wobei in Bewegungsrichtung des Rades beiderseits des Lichtstrahls mindestens eine Kamera zur Erfassung des Profils vorgesehen ist. Hierdurch gelingt es, zwei unterschiedliche Profilbilder zu erfassen, bei deren Obereinstimmung das zu vermessende Rad sich exakt in Meßposition befunden hat, wobei die unterschiedlichen Profilbilder dann, wenn keine Übereinstimmung erreicht wird, vom Rechner interpolierbar sind.

Nach der Erfindung ist ebenfalls vorgesehen, daß mehrere Kameras je zu einer Kameragruppe zusammengefaßt sind, von denen mindestens eine Gruppe direkt auf den Lichtschnitt oder die Lichtkante und mindestens eine weitere Gruppe über eine Umlenkeinrichtung auf den Lichtschnitt oder die Lichtkante gerichtet ist. Auf diese Art und Weise wird einerseits eine höhere Auflösegenauigkeit des erfaßten Bildes erreicht und es wird andererseits die Unterbringung der notwendigen Kameras auf dem recht engen Raum ermöglicht.

Eine andere Ausgestaltung der Erfindung sieht wiederum vor, daß alle Kameras stationär unterhalb der Bewegungsebene angeordnet sind. Dies verringert den Konstruktionsaufwand ganz erheblich.

Es ist ergänzend nach der Erfindung vorgeschlagen, daß zwei Beleuchtungsquellen vorgesehen sind, die in Richtung der Radsatzachse versetzt und synchronisiert sind. Hierdurch wird jede Schattenwirkung des Profils, beispielsweise durch den Spurkranz, ausgeschlossen und dennoch eine vollständige Beleuchtung des Profils erreicht.

Ergänzend wird nach der Erfindung noch vorgeschlagen, daß mehrere Kameras vorgesehen sind, von denen jede einen anderen Profilabschnitt aufnimmt, wobei die mit den Kameras verbundene Auswerteelektronik Einrichtungen für eine parallele Vorverarbeitung und für eine Zwischenspeicherung und seriellen Verarbeitung der Signale der Kameras enthält. Auch hierdurch wird einerseits eine höhere Auflösegenauigkeit erreicht und es gelingt, die Gesamtbeurteilung mit nur einem einzigen Rechner vorzunehmen, weil der Rechner die von den einzelnen Kameras gelieferten Daten nacheinander verwertet und zu einem Gesamtprofil zusammensetzt. Hierzu ist allerdings eine Vorverarbeitung der Daten der Kameras und eine entsprechende Zwischenspeicherung erforderlich.

Weiterhin ist nach der Erfindung noch vorgeschlagen, daß Kameras und Beleuchtungseinrichtung in Abhängigkeit vom Durchmesser des zu messenden Rades beweglich und einstellbar am Träger angeordnet sind. Hierdurch kann auf einfache Art und Weise bei nicht vertikaler Beleuchtung des Profiles die ganze Einrichtung auf unterschiedliche Durchmesser des zu messenden Rades eingerichtet werden.

Schließlich ist nach der Erfindung nach vorgeschlagen, daß das abgestrahlte Licht über bild erhaltende Lichtleitfasern den Kameras zugeleitet wird. Hierdurch wird Kameraposition und Kamerazahl nahezu frei wählbar.

Die Erfindung soll nun anhand der beigefügten Zeichnungen, die Ausführungsbeispiele zeigen, näher erläutert werden.

Es zeigen:
Figur 1: Schematischer Aufbau der Einrichtung in Seitenansicht
Figur 2: Alternative Anordnung zu Figur 1
Figur 3: Schematischer Aufbau der Rechneranlage mit Kameras für beide Räder eines Radsatzes, dem Kamerainterface zum Zentralrechner, dem Massenspeicher und als Ausgabeeinheit ein Terminal
Figur 4: Ansicht in Richtung des Pfeils A nach Figur 1

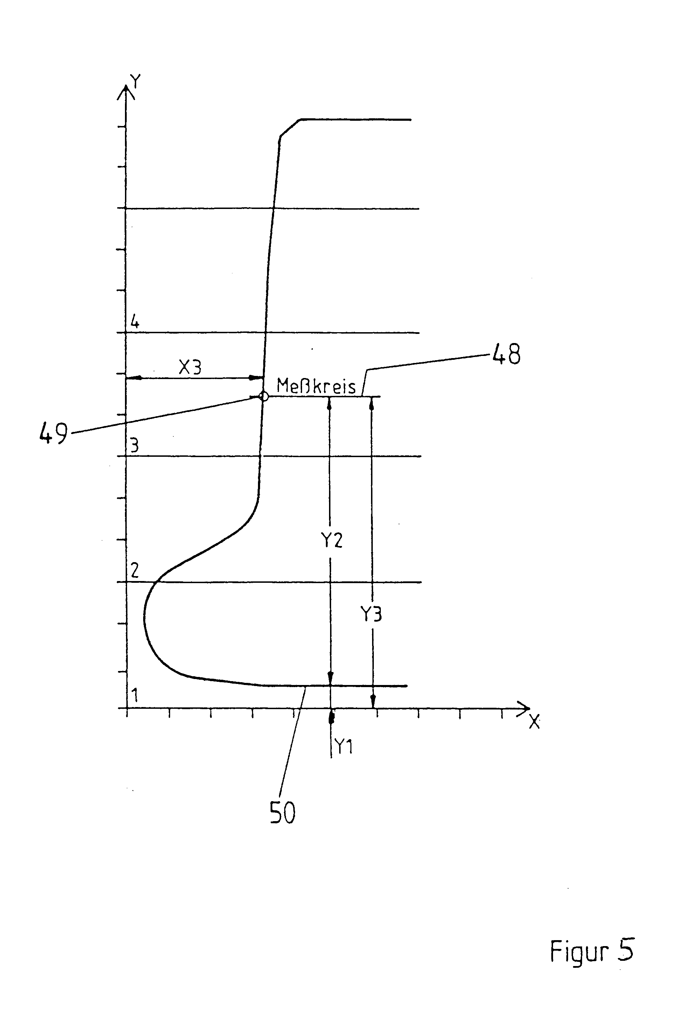

Figur 5: Zeichnerische Darstellung der Datenauswertung im Rechner

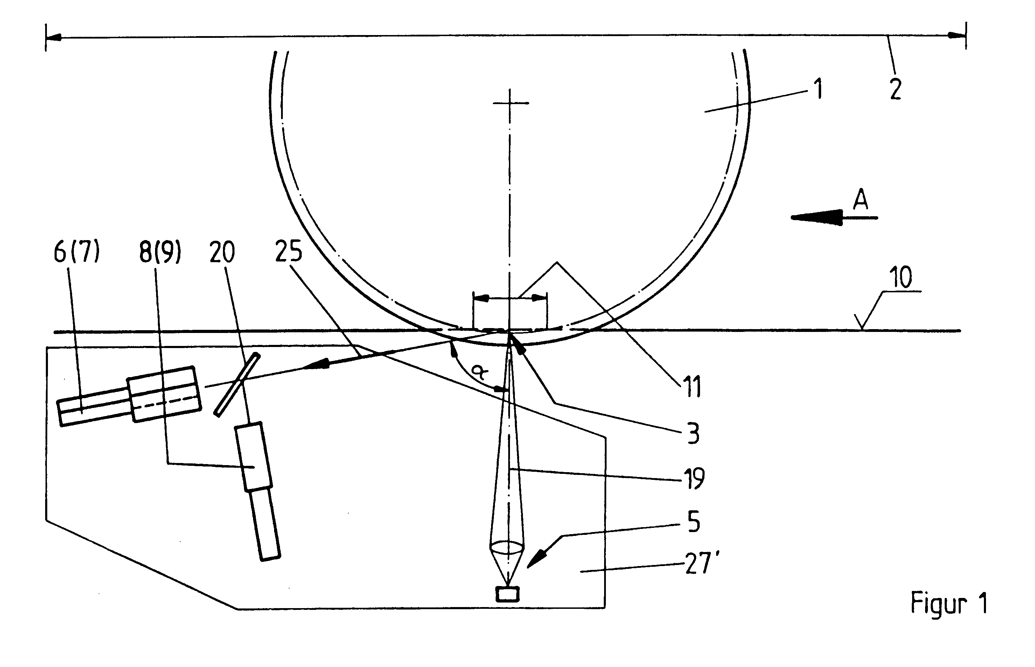

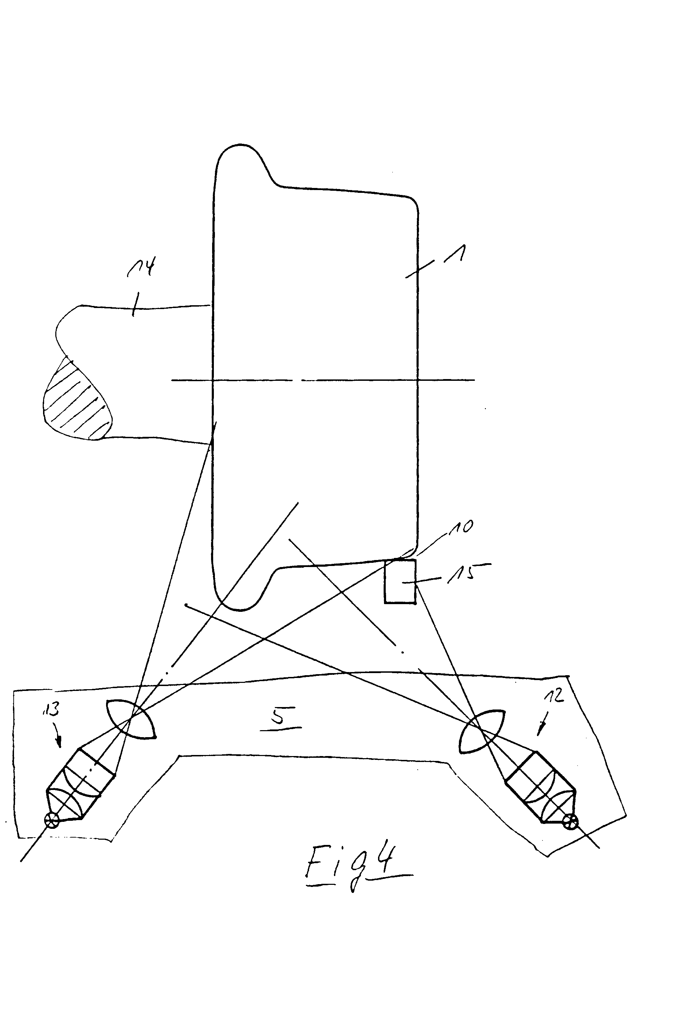

Die Figur 1 zeigt den schematischen Aufbau einer Einrichtung nach der Erfindung in Seitenansicht. Figur 4 zeigt eine Ansicht in Richtung des Pfeils A nach Figur 1, jedoch ohne Darstellung der Kameras 6-9. In einer Meßstrecke 2 ist eine Hilfsschiene 15 als Tragmittel für den Radsatz verlegt. auf der ein Rad 1 eines nicht näher dargestellten Radsatzes am äußeren Bereich der Lauffläche abrollt. Das Rad ist Bestandteil eines Radsatzes, der eingebaut sein kann in einen Waggon oder als angetriebener Radsatz in ein Triebfahrzeug. Das jeweilige Fahrzeug bewegt sich während des Meßvorganges langsam durch die Meßstrecke 2.

Unterhalb einer Bewegungsebene 10 der Hilfsschiene 15 ist ein Träger 27', ausgebildet als Platte, vorgesehen, auf dem vier sog. CCD-Kameras 6-9 angeordnet sind, die in zwei Baugruppen aufgeteilt sind. Es sind dies einerseits die Kameras 6 und 7 und die winklig hierzu angeordneten Kameras 8 und 9. Diese beschriebenen. Kameras 6-9 befinden sich in der Darstellung nach Figur 1 links einer Meßposition 3. Es ist auch möglich die gleiche Kameraanordnung noch einmal rechts von der Meßposition 3 vorzusehen. Jede Kamera enthält eine Abbildungsoptik und eine Sensorplatte als Digitalisierungseinrichtung.

Vertikal unterhalb der Meßposition 3 ist eine Beleuchtungseinrichtung 5 vorgesehen, die zwei in Richtung der Radsatzachse 14 versetzt angeordnete Beleuchtungsquellen 12 und 13 trägt. Diese Beleuchtungsquellen 12 und 13 sind optisch so ausgestaltet, daß ihr Lichtstrahl 19 auf dem Profil des Rades 1 einen Lichtschnitt oder eine Lichtkante erzeugt. Beide Beleuchtungsarten sind im Stand der Technik bekannt und es muß daher hier nicht näher erläutert werden, wie ein Lichtschnitt oder eine Lichtkante erzeugt wird. Die Verwendung von zwei Beleuchtungsquellen 12 und 13 in der in Figur 4 dargestellten Anordnung sorgt dafür, daß Schattenwirkungen, beispielsweise vom Spurkranz oder von der Hilfsschiene 15, verhindert werden.

Da die Kameras 6-9 den Durchlauf eines Rades 1 durch die Meßstrecke 2 nicht behindern dürfen, müssen sie unterhalb der Bewegungsebene 10 angeordnet sein. Nach Figur 1 sind daher die Kameras 6 und 7 so angeordnet, daß sie das unter der Abstrahlrichtung 25 abgestrahlte Licht empfangen können, die Abstrahlrichtung 25 bildet mit dem Lichtstrahl 19 einen Winkel der kleiner als 90 aber größer als 60 ist. Hierdurch allerdings tritt bei Anordnung nach Figur 1 eine Profilverzerrung auf, die später im Rechner wieder rückgängig gemacht werden muß. Dies ist jedoch ohne weiteres möglich. Zur Erreichung einer höheren Auflösegenauigkeit der Abbildung sind zwei weitere Kameras 8 und 9 vorgesehen, die aus Platzgründen jedoch winklig zu den Kameras 6 und 7 angeordnet sind, wie die Darstellung nach Figur 1 erkennen läßt. Eine Umlenkeinrichtung 20 sorgt als Strahlteiler, z. B. in Form eines halbdurchlässigen Spiegels dafür, daß auch die Kameras 8 und 9 von dem abgestrahlten Licht beaufschlagt werden, Es ist jedoch auch die Verwendung von Lichtleitfasern möglich.

Damit die Kameras 6-9 richtige Daten für die nachfolgende Auswerteelektronik liefern können, muß eine Profilaufnahme möglichst genau in der Meßposition 3 erfolgen. Es müssen daher Mittel vorgesehen sein, die diese Meßposition erfassen und dann Kamera und Beleuchtung auslösen. Die Praxis zeigt, daß dies beispielsweise mit einem Schienenschalter möglich ist. Es sind im Handel hierzu brauchbare Schalter erhältlich, deren Schaltpunktstreuung ausreichend klein ist. Ein solcher Schienenschalter muß nicht notwendigerweise mechanisch oder elektromagnetisch aufgebaut sein. Es sind auch für den beschriebenen Einsatzzweck anwendbare optische Schalter erhältlich oder optische Verfahren möglich. Erreicht das Rad 1 seine Meßposition 3 in der Meßstrecke 2, so wird von der beschriebenen Schalteinrichtung ein Beleuchtungsblitz der Beleuchtungseinrichtung 5 ausgelöst und es werden gleichzeitig die Kameras 6-9 aktiviert. Es ist nun in den Kameras 6-9 ein Profilbild entstanden, das für die Weiterverarbeitung der Auswerteelektronik zugeführt werden kann.

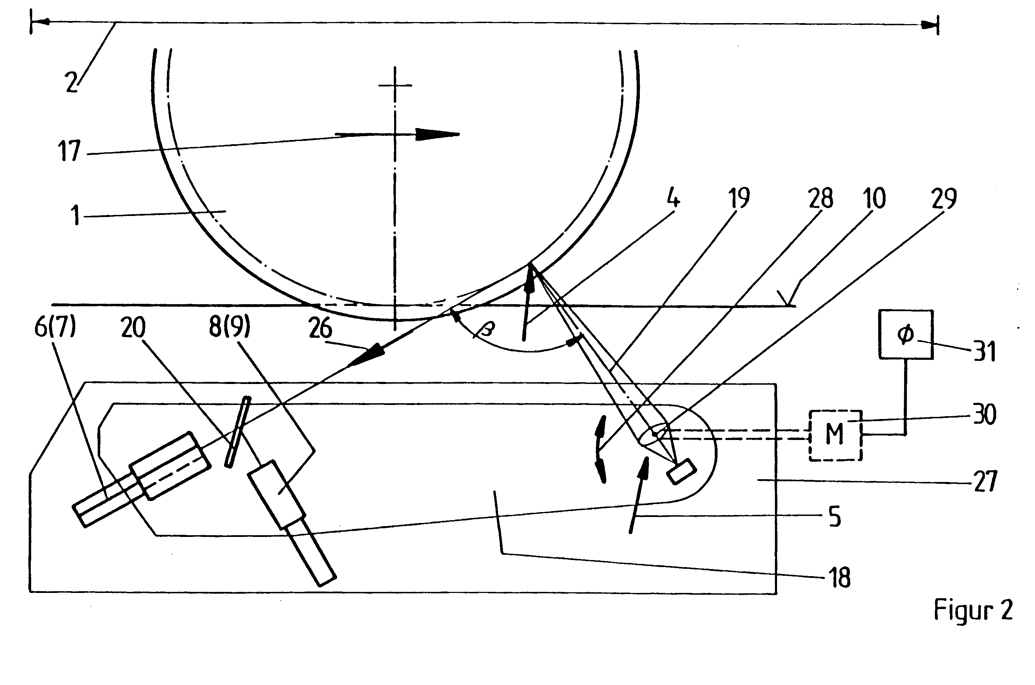

Wie Figur 2 zeigt, ist es durch eine geringe Veränderung der Anordnung von Beleuchtungseinrichtung 5 und den Kameras 6-9 möglich, den Bereich für die Meßposition 4 zu vergrößern und gleichzeitig eine verzerrte Abbildung des Profils in den Kameras 6-9 zu vermeiden, wodurch auch der entsprechende Rechneraufwand für die Entzerrung vermieden werden kann. Hierzu ist es beispielsweise möglich, die Beleuchtungseinrichtung 5 und die Kameras 6-9 so anzuordnen, daß zwischen dem Lichtstrahl 19 und der Abstrahlrichtung 26 ein Winkel β kleiner 90 vorhanden ist. Damit hierbei die Kameras 6-9 unterhalb der Bewegungsebene 10 verbleiben können, muß der Lichtstrahl 19 radial und unter einem spitzen Winkel zur Bewegungsebene 10 auf die Umfangsfläche des Rades 1 auftreffen. Rad 1 bewegt sich bei einer Ausführungsform nach Figur 2 in Richtung des Pfeiles 17 durch die Meßstrecke 2 hindurch. Es ist jedoch auch eine entgegengesetzte Bewegungsrichtung möglich.

Da bei einer Anordnung nach Figur 2 auch die Bedingung erfüllt sein muß, daß im Meßpunkt 4 der Lichtstrahl 19 radial auf die Umfangsfläche des Rades 1 auftrifft, muß der Lichtstrahl 19 seine Neigung in Abhängigkeit vom Durchmesser des ankommenden Rades 1 ändern können. Gleichzeitig aber muß sich entsprechend die Lage der Kameras 6-9 ändern. Dies wird dadurch erreicht, daß an einem Träger 27 eine Trageinrichtung 18 vorgesehen ist, die am Träger 27 um den Drehpunkt 29 schwenkbar angeordnet ist. Auf der Trageinrichtung 18 ist in dargestellter Anordnung die Beleuchtungseinrichtung 5 einerseits und sind die Kameras 6-9 andererseits angeordnet. Die Trageinrichtung 18 kann in Richtung des Pfeiles 28 mittels des Motors 30 geschwenkt werden. Die Konstruktion als solche ist nur schematisch dargestellt und kann in ihrer detaillierten Ausführung dem durchschnittlichen Fachmann überlassen werden. Motor 30 wird gesteuert von einer Steuereinrichtung 31, in die vorher der Durchmesser des ankommenden Rades 1 eingegeben wurde. Hierbei kann die Durchmesserangabe von einer in der Meßstrecke 2 angeordneten oder der Meßstrecke 2 vorgeschalteten Meßeinrichtung kommen.

Es ist jedoch bei einer Anordnung nach Figur 1 auch möglich, den Bereich für die Meßposition 3 dadurch zu erweitern, daß eine schnelle Mehrfachmessung in einem genügend kleinen Meßbereich 11 vorgenommen wird. Wird eine einseitige Anordnung der Kameras 6-9 wie nach Figur 1 verwendet, so ensteht im Rechner eine anwachsende und danach evtl. wieder abfallende Profilkontur. Da die Geschwindigkeit der hintereinanderfolgenden Aufnahmen bekannt ist und ebenfalls bekannt ist, daß das zu messende Rad 1 eine Kreiskontur hat, die auf der Bewegungsebene 10 entlang der Meßstrekke 2 bewegt wird, ist auch das zu erwartende Anwachsen der zunächst verzerrten Profilkontur bekannt. Es kann dann auch festgestellt werden, ob mit einer Aufnahme der genaue Höchstpunkt getroffen wurde oder ob unmittelbar vor und unmittelbar nach dem Höhstpunkt jeweils eine Aufnahme gemacht wurde. Im erstgenannten Fall kann das Ergebnis unmittelbar verwendet werden, im zweitgenannten Fall muß im Rechner zunächst noch eine Korrektur durchgeführt werden.

Es ist jedoch auch denkbar, bei einer Ausführungsform nach Figur 1 beidseitig des Lichtstrahls 19 eine Kameraanordnung, wie in Figur 1 nur einseitig gezeichnet, zu verwenden. Während der schnell aufeinanderfolgenden Mehrfachaufnahmen im Meßbereich 11 laufen dann im Rechner zwei unterschiedliche Profilkonturen aus entgegengesetzten Richtungen aufeinander zu. Wird eine Aufnahme genau in Meßposition 3 von allen Kameras gemacht, so muß im Rechner einmal eine dekkungsgleiche Kontur entstehen, weil von beiden Kamerasystemen eine identische Kontur geliefert wird.

Diese Kontur entspricht dann der zu messenden Kontur. Gelingt dies jedoch nicht, so kann zwischen den Konturen, die am nächsten zusammenliegen, problemlos interpoliert werden. Es ist bei dieser Ausführung zwar ein höherer apparativer Aufwand nötig: es ist jedoch bei der Software nicht mehr erforderlich, die zu erwartende Konturverschiebung in Abhängigkeit vom Durchmesser des Rades 1 und vom Zeitabstand der Bildfolge zu berücksichtigen.

Um eine ausreichend schnelle Bildfolge zu erreichen, ist es denkbar, mehrere Sätze von Kameras im Wechsel hintereinander Aufnahmen machen zu lassen oder aber bei den vorhandenen Kameras und bei Einsatz einer Lichtschnittbeleuchtung eine rasch aufeinanderfolgende Mehrfachbelichtung durchzuführen, bevor die von der Kamera erfaßten Daten ausgelesen werden in den Rechner.

Der Meßvorgang selbst und dessen Auswertung kann in einfachster Art wie nachfolgend beschrieben durchgeführt werden.

Befindet sich ein Rad 1 in einer Meßposition 3 oder 4 so wird über die Beleuchtungseinrichtung 5 ein Lichtschnitt oder eine Lichtkante in an sich bekannter Weise am Umfang des Rades 1 erzeugt, wodurch ein von den bereits beschriebenen Halbleiterkameras erfaßbares Profil erzeugt wird. Aus Platzgründen können die Kameras auch winklig zueinander angeordnet sein, wobei die Bildaufteilung durch den als Strahlteiler wirkenden, halbdurchlässigen Spiegel 20 vorgenommen wird. Alle Kameras 6-9 werden von einer gemeinsamen Synchronquelle versorgt, die einen bildpunktgenauen Gleichlauf garantiert. Es kann jede Kamera mit einem Zoom-Objektiv ausgerüstet sein, wobei dem Objektiv jeweils ein Blaufilter zur Unterdrückung des Infrarotanteils des Blitzlichtes vorgeschaltet sein kann. Die Brennweite des Objektives muß jedenfalls so sein, daß die Empfängerfläche jeder Kamera vollständig ausgefüllt ist.

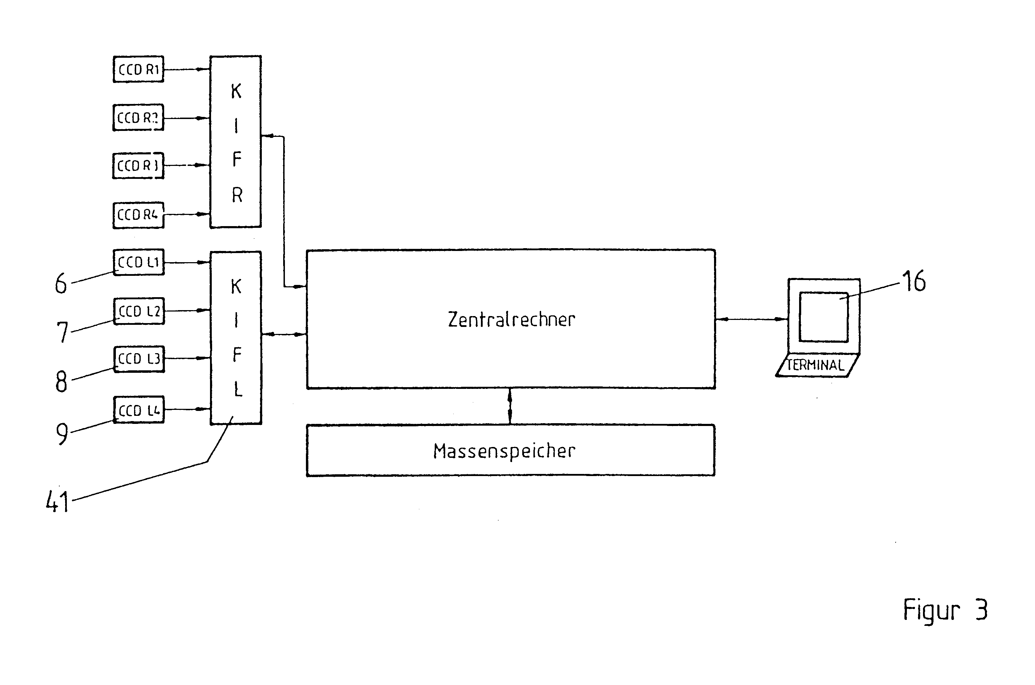

Da die Signale mehrerer Kameras von nur einem Rechner verarbeitet werden sollen, ist für jede Kamera separat eine Bildsignalvorverarbeitung erforderlich. Diese Vorverarbeitung hat den Vorteil, daß der nachfolgende Aufwand beim Hauptrechner niedrig gehalten werden kann. Außerdem wird hierdurch das Zusammenschalten einer nahezu beliebigen Anzahl von Kameras ermöglicht. Bei dieser Vorverarbeitung wird jeweils der Synchronanteil des Video-Signals abgetrennt und über eine selbstregelnde Schwelle aus dem Graubild ein Binärbild erzeugt. In diesem Binärbild wird nun in jeder Zeile der Schwarz- Weiß-Übergang des Profilverlaufs detektiert und als Koordinatenwert abgespeichert. Hierzu sind etwa 40 ms erforderlich. Dieser Prozeß läuft für jede Kamera parallel und synchron ab. Dies bedeutet, daß nach einem solchen Bildurchlauf die komplette Profillinie als Datensatz existiert. Diese Daten werden dann in den Hauptrechner eingelesen, so daß intern im Rechner, sozusagen von diesen Koordinaten gebildet, eine Profillinie in einem rechnerinternen Koordinatensystem entsteht, wie in Figur 6 als Prinzip dargestellt. Die Profillinie ist hierbei innerhalb des Koordinatensystems (Figur 6) vom Rechner eindeutig festlegbar durch die Definition des sog. Meßkreises 48, der auf der Profillinie den Punkt 49 bildet. Die Lage des Punktes 49 in Y-Richtung von der Stirnseite 50 des Profils ist per Definition festgelegt. Es soll dies der Abstand Y 2 sein. Über die im Rechner befindlichen Koordinaten kann der Rechner feststellen, in welchem Abstand Y 1 die Linie der Stirnseite 50 verläuft und es kann damit der Rechner die Lage des Meßkreises 48 mit dem Abstand Y 2 zur Stirnseite 50 festlegen. Der Meßkreis liegt dann im dargestellten Koordinatensystem im Abstand Y 3 von der Abszisse. Es ist aber auch der Abstand X 3 von der Ordinate des Bildpunktes der Konturlinie, der im Meßkreis 48 liegt, bekannt, so daß im dargestellten Koordinatensystem die Lage des Punktes 49 eindeutig vom Rechner bestimmt werden kann. Es kann nun der Rechner mit diesem Punkt 49 ein Sollprofil in seinem internen Koordinatensystem so anordnen, daß der Punkt 49 des Sollprofils und der Punkt 49 des Istprofils deckungsgleich angeordnet sind. Danach ist es dann problemlos möglich, die Abweichungen der Koordinaten der einzelnen Punkte des Istprofils von den Koordinaten der einzelnen Punkte des Sollprofils zu ermitteln und beispielsweise an einem Bildschirm 16 (Figur 3) als Ausgabeeinheit als Istprofillinie auszugeben. Ebenso könnte die Istprofillinie von einem Plotter ausgedruckt werden oder es könnten die rechnerinternen Daten auf andere sinnvolle Art und Weise weitergeleitet werden, beispielsweise einer Maschinensteuerung zur Nachbearbeitung des Radsatzes zugeleitet werden.

Figur 3 zeigt den schematischen Aufbau der Signalverarbeitung. Die Kameras 6, 7, 8 und 9 einer Seite, nämlich der linken Seite (die nicht bezeichneten Kameras stellen die Kameras der rechten Seite dar) geben ihre Signale zur Signalvorverarbeitung in ein Interface 41, in dem die bereits beschriebene Signalvorverarbeitung durchgeführt wird. Die Menge der ankommenden Daten wird in einem Massenspeicher abgelegt und es komuniziert das genannte Interface und der Massenspeicher jeweils mit dem Zentralrechner, der der jeweiligen Ausgabeeinheit - in Figur 3 der Bildschirm 16 - das Ergebnis zuführt.

## Patentansprüche

1. Verfahren zur automatische berührungslosen Vermessung des Radprofils der Räder (1) von Eisenbahnradsätzen, bei dem das Profil mindestens teilweise beleuchtet wird, wobei das sich durch die Beleuchtung ergebende Profilbild in Kontur von mindestens einer Abbildungsoptik erfaßt und über eine Digitalisierungseinrichtung, einer Auswerteeinrichtung zur Auswertung zugeleitet wird, wobei jedes Rad (1) mindestens angenähert radial von unten von mindestens einer Beleuchtungseinrichtung (5), die einen Lichtschnitt oder eine Lichtkante auf der Umfangsfläche des Rades (1) und parallel zur Radachse erzeugt, beleuchtet wird, und wobei jedes Rad (1) eine mindestens eine Meßposition enthaltende Meßstrecke (2) durchrollt und hierbei das Erreichen mindestens einer Meßposition ermittelt wird und wobei das Rad in dieser Meßposition (3,4) während des Rollens in der Meßstrecke (2) mit der genannten Beleuchtungseinrichtung beleuchtet und das Profilbild von der Abbildungsoptik erfaßt wird, wobei in der Meßstrecke (2) jedes Rad (1) eines Radsatzes nur am äußeren Bereich seiner Lauffläche abrollt.

2. Verfahren nach Anspruch 1, dadurch gekennzeichnet, daß die Beleuchtung unter einem spitzen Winkel zur Bewegungsrichtung eines Rades durch die Meßstrecke (2) erfolgt.

3. Verfahren nach Anspruch 1, dadurch gekennzeichnet, daß die Beleuchtung rechtwinklig zur Bewegungsebene (10) erfolgt.

4. Verfahren nach Anspruch 3, dadurch gekennzeichnet, daß eine Lichtschnittbeleuchtung verwendet wird, wobei das sich durch die Beleuchtung ergebende Profilbild beidseitig zu einer Radialebene, in der das Profilbild liegt, von je mindestens einer Abbildungsoptik erfaßt und über eine Digitalisierungseinrichtung einer Auswerteeinrichtung zur Auswertung zugeleitet wird.

5. Verfahren nach Anspruch 3 oder 4, dadurch gekennzeichnet, daß in einem Meßbereich (11) in einer schnellen Folge hintereinander alle Abbildungsoptiken mehrere Profilbildaufnahmen durchführen, die je über eine Digitalisierungseinrichtung der Auswerteeinrichtung zugeführt werden, die das Profil mit der geringsten Verzerrung auswählt und falls nötig extrapoliert oder zwischen zwei Profilen mit geringster Verzerrung interpoliert.

6. Verfahren nach mindestens einem der Ansprüche 1 bis 5, dadurch gekennzeichnet, daß eine Lichtschnittbeleuchtung verwendet wird, wobei jede Abbildungsoptik kurz hintereinander mindestens zwei Profilaufnahmen macht, bevor die hierdurch in der Digitalisierungseinrichtung entstandenen Werte ausgelesen und der Auswerteeinrichtung zugeleitet werden.

7. Verfahren nach mindestens einem der Ansprüche 1 bis 6, dadurch gekennzeichnet, daß das Profil aus zwei in Richtung der Radsatzachse (14) versetzten, synchronisierten Beleuchtungsquellen (12,13) beleuchtet wird.

8. Einrichtung zur automatischen berührungslosen Vermessung des Radprofils der Räder (1) von Eisenbahnradsätzen mit mindestens einem Eisenbahnradsatz und mit einer optische Mittel zur Erzeugung eines Lichtschnittes oder einer Lichtkante sowie eine Abbildungsoptik enthaltenden Beleuchtungseinrichtung (5), mit der die Umfangsfläche eines zu vermessenden Rades (1) mindestens teilweise beleuchtet wird, wobei der Abbildungsoptik weiter eine Digitalisierungseinrichtung und eine mit dieser verbundene Auswerteeinrichtung zugeordnet ist, zur Durchführung des Verfahrens nach einem der Ansprüche 1 bis 7, mit Mitteln (15,) zum Tragen des Radsatzes, die als Hilfsschiene (15) für das Abrollen jedes Rades eines Radsatzes in einer Meßstrecke (2) ausgebildet und an ein Gleis angeschlossen oder anschließbar und so ausgebildet und angeordnet sind, daß jedes Rad eines Radsatzes nur am äußeren Bereich der Lauffläche abrollt, wobei weiter die Beleuchtungseinrichtung (5) unterhalb einer Bewegungsebene (10) der zugeordneten Hilfsschiene (15) angeordnet ist, und wobei weiter die optische Achse der Abbildungsoptik mit den wenigstens angenähert radial zum Rad verlaufenden Lichtstrahlen der Beleuchtungseinrichtung einen Winkel (a,ß) von kleiner als 90 aber nicht kleiner als 60 ° bildet, wobei weiter Mittel vorhanden sind zur Positionierung von Abbildungsoptiken mit Beleuchtungseinrichtung relativ zur Umfangsfläche eines Rades (1) und Mittel zur automatischen Aktivierung der Einrichtung bei Erreichen einer Meßposition und wobei die Auswerteeinrichtung mit einer Ausgabeeinheit (16) verbunden ist.

9. Einrichtung nach Anspruch 8, dadurch gekennzeichnet, daß mindestens die Abbildungsoptik so lageveränderlich ist, daß der Schnittpunkt ihrer optischen Achse mit dem Lichtstrahl (19) der Beleuchtungseinrichtung veränderbar ist, derart, daß er auf die Radumfangsfläche einstellbar ist.

10. Einrichtung nach mindestens einem der Ansprüche 8 und 9, dadurch gekennzeichnet, daß die Abbildungsoptik und die Digitalisierungseinrichtung Elemente einer elektronischen Kamera (6-9) sind.

11. Einrichtung nach Anspruch 8, dadurch gekennzeichnet, daß die Beleuchtungseinrichtung (5) so angeordnet und ausgebildet ist, daß sie das Profil des Rades (1) unter einem spitzen Winkel zu dessen Bewegungsrichtung (17) anleuchtet.

12. Einrichtung nach Anspruch 10 oder 11, dadurch gekennzeichnet, daß Beleuchtungseinrichtung (5) und Kamera (6-9) verstellbar auf einer Trageinrichtung (18) angeordnet sind, wobei Beleuchtungseinrichtung und Kamera relativ zum Radsatz verfahrbar sein können.

13. Einrichtung nach mindestens einem der Ansprüche 8 bis 12, dadurch gekennzeichnet, daß Mittel vorgesehen sind, die den das Profil beleuchtenden Lichtstrahl (19) vertikal zur Bewegungsebene (10) und von unten gegen das Profil führen.

14. Einrichtung nach Anspruch 13, dadurch gekennzeichnet, daß unterhalb der Bewegungsebene (10) für jedes Rad (1) eine Beleuchtungseinrichtung (5) zur Erzeugung eines Lichtschnittes mit vertikal gegen das Profil gerichtetem Lichtstrahl (19) vorgesehen ist, wobei in Bewegungsrichtung (17) des Rades (1) beiderseits des Lichtstrahls (19) mindestens eine Kamera (6-9) zur Erfassung des Profils vorgesehen ist.

15. Einrichtung nach mindestens einem der Ansprüche 10 bis 14, dadurch gekennzeichnet, daß mehrere Kameras (6,7,8,9) je zu einer Kameragruppe zusammengefaßt sind, von denen mindestens eine Gruppe (6,7) direkt auf den Lichtschnitt oder die Lichtkante und mindestens eine weitere Gruppe (8,9) über eine Umlenkeinrichtung (20) auf den Lichtschnitt oder die Lichtkante gerichtet ist.

16. Einrichtung nach mindestens einem der Ansprüche 10 bis 15, dadurch gekennzeichnet, daß alle Kameras (6-9) stationär unterhalb der Bewegungsebene (10) angeordnet sind.

17. Einrichtung nach mindestens einem der Ansprüche 10 bis 16, dadurch gekennzeichnet, daß zwei Beleuchtungsquellen (12,13) vorgesehen sind, die in Richtung der Radsatzachse (14) versetzt und synchronisiert sind.

18. Einrichtung nach mindestens einem der Ansprüche 10 bis 16, dadurch gekennzeichnet, daß mehrere Kameras (6-9) vorgesehen sind, von denen jede einen anderen Profilabschnitt aufnimmt, wobei die mit den Kameras (6-9) verbundene Auswerteelektronik Einrichtungen (41) für eine parallele Vorverarbeitung und für eine Zwischenspeicherung und seriellen Verarbeitung der Signale der Kameras (6-9) enthält.

19. Einrichtung nach mindestens einem der Ansprüche 10 bis 16 und 18, dadurch gekennzeichnet, daß Kameras (6-9) und Beleuchtungseinrichtung (5) in Abhängigkeit vom Durchmesser des zu messenden Rades (1) beweglich und einstellbar am Träger (27) angeordnet sind.

20. Einrichtung nach mindestens einem der Ansprüche 8 bis 19, dadurch gekennzeichnet, daß das abgestrahlte Licht über bilderhaltende Lichtleitfasern den Kameras (6-9) zugeleitet wird.

## Claims

1. Method for the automatic contactless measurement of the wheel profile of the wheels (1) of railway wheel sets, in which the profile is at least partially illuminated, wherein the profile image resulting from the illumination is detected in contour by at least one optical imaging system and is fed by way of a digitalisation device to an evaluation device for evaluation, wherein each wheel (1) is illuminated substantially radially from below by at least one illumination device (5), which produces a light section or a light edge on the peripheral surface of the wheel (1) and parallel to the wheel axis, and wherein each wheel (1) rolls through on a measurement path (2) which includes at least one measurement position, and wherein the wheel in this measurement position (3,4) is illuminated by the said illumination device during the rolling in the measurement path (2) and the profile image is detected by the optical imaging system, wherein in the measurement path (2) each wheel (1) of a wheel set rides only on the outer zone of its rolling surface.

2. Method as in claim 1, characterised in that the illumination is effected at an acute angle to the direction of movement of a wheel through the measurement path (2).

3. Method as in claim 1, characterised in that the illumination is effected at right angles to the plane of movement (10).

4. Method as in claim 3, characterised in that a light section illumination is used, wherein the profile image resulting from the illumination is detected on either side of a radial plane, in which the profile image lies, in each case by at least one optical imaging system, and is fed by way of a digitalisation device to an evaluation device for evaluation.

5. Method as in claim 3 or 4, characterized in that, in a measurement region (11), all the optical imaging systems take a plurality of profile image pictures one after the other in rapid succession, each of which is fed by way of a digitalisation device to the evaluation device, which selects the profile with the least distortion and, if necessary, extrapolates, or interpolates between two profiles having least distortion.

6. Method as in at least one of claims 1 to 5, characterized in that a light section illumination is used, wherein each optical imaging system takes at least two profile pictures in rapid succession, before the values obtained in this way in the digitalisation device are read out and fed to the evaluation device.

7. Method as in at least one of claims 1 to 6, characterized in that the profile is illuminated from two synchronized illumination sources (12, 13), which are offset in the direction of the wheel set axis (14).

8. Device for the automatic contactless measurement of the wheel profile of the wheels (1) of railway wheel sets, comprising at least one railway wheel set and an optical means for producing a light section or a light edge, as well as an illumination device (5) containing an optical imaging system and by which the peripheral surface of a wheel (1) to be measured is at least partially illuminated, wherein the optical imaging system is associated with a digitalisation device and an evaluation device connected to the latter, for carrying out the method according to one of claims 1 to 7, with means (15) for supporting the wheel set which is formed as auxiliary rails (15) on which each wheel of the wheel set can ride in a measurement path (2), said supporting means being connected to or connectable to a track and being so formed and arranged that each wheel of a wheel set rides only on the outer zone of the rolling surface, wherein additionally the illumination device (5) is arranged below a plane of movement (10) of the associated auxiliary rails (15), and wherein additionally the optical axis of the optical imaging system forms an angle (a, ß) of less than 90 but not less than 60 with the light beam from the illumination device extending at least substantially radially relative to the wheel, wherein further means are provided for the positioning of the optical imaging system with illumination device relative to the peripheral surface of a wheel (1) and means are provided for the automatic activation of the device upon reaching a measurement position, and wherein the evaluation device is connected to an output unit (16).

9. Device as in claim 8, characterised in that the position of at least the optical imaging system can be changed in such a way that the point of intersection of its optical axis with the light beam (19) of the illumination device can be changed in such a way that it is adjustable to the wheel peripheral surface.

10. Device as in at least one of claims 8 and 9, characterised in that the optical imaging system and the digitalisation device are elements of an electronic camera (6-9).

11. Device as in claim 8, characterized in that the illumination device (5) is disposed and formed in such a way that it illuminates the profile of the wheel (1) at an acute angle to the direction of movement (17) of the latter.

12. Device as in claim 10 or 11, characterized in that illumination device (5) and camera (6-9) are adjustably disposed on a support device (18), wherein illumination device and camera can be displaced relative to the wheel set.

13. Device as in at least one of claims 8 to 12, characterised in that means are provided which guide the light beam (19), which illuminates the profile, vertically to the plane of movement (10) and from below against the profile.

14. Device as in claim 13, characterized in that, below the plane of movement (10), for each wheel (1) an illumination device (5) is provided for producing a light section with a light beam (19), which is directed vertically against the profile, wherein, in the direction of movement (17) of the wheel (1) at least one camera (6-9) is provided on either side of the light beam (19) for detecting the profile.

15. Device as in at least one of claims 10 to 14, characterized in that a plurality of cameras (6,7,8,9) are combined to form a camera group, at least one group (6,7) of which is directed directly onto the light section or the light edge, and at least a further group (8,9) is directed by way of a deflection device (20) onto the light section or light edge.

16. Device as in at least one of claims 10 to 15, characterized in that all cameras (6-9) are disposed in a stationary manner below the plane of movement (10).

17. Device as in at least one of claims 10 to 16, characterized in that two illumination sources (12, 13) are provided, which are offset and synchronized in the direction of the wheel set axis (14).

18. Device as in at least one of claims 10 to 16, characterized in that a plurality of cameras (6-9) are provided, each of which photographs a different profile portion, wherein the evaluation electronics connected to the cameras (6-9) contain devices (41) for parallel pre-processing and for intermediate storage and serial processing of the signals of the cameras (6-9).

19. Device as in at least one of claims 10 to 16 and 18, characterized in that cameras (6-9) and illumination device (5) are moveable in dependence upon the diameter of the wheel (1) to be measured and are adjustably disposed on the carrier (27).

20. Device as in at least one of claims 8 to 19, characterized in that the emitted light is passed by way of image-retaining light-conducting fibres to the cameras (6-9).

## Revendications

1. Procédé pour mesurer automatiquement sans contact le profil des roues (1) de trains de roues de véhicules ferroviaires, selon lequel on éclaire au moins partiellement le profil, étant précisé que le contour de l'image du profil produite par l'éclairement est saisi par au moins un système optique de production d'image et est transmis par l'intermédiaire d'un dispositif de numérisation à un dispositif de traitement pour être traité, que l'on éclaire chaque roue (1) par le bas, dans une direction au moins approximativement radiale, à l'aide d'au moins un dispositif d'éclairement (5) qui produit, sur la surface périphérique circonférentielle de la roue (1), une ligne de coupe lumineuse ou une arête lumineuse parallèle à l'axe de la roue, que chaque roue (1) roule sur une section de mesure (2) contenant au moins une position de mesure et le moment où elle atteint au moins une position de mesure est déterminé, et que dans cette position de mesure (3, 4), on éclaire la roue, pendant qu'elle roule sur la section de mesure (2), à l'aide dudit dispositif d'éclairement et l'image du profil est saisie par le système optique de production d'image, chaque roue (1) d'un train de roues, sur la section de mesure (2), roulant seulement au niveau de la zone extérieure de sa surface de roulement.

2. Procédé selon la revendication 1, caractérisé en ce que l'éclairement se fait suivant un angle aigu par rapport au sens de déplacement d'une roue à travers la section de mesure (2).

3. Procédé selon la revendication 1, caractérisé en ce que l'éclairement se fait suivant un angle droit par rapport au plan de déplacement (10).

4. Procédé selon la revendication 3, caractérisé en ce que l'on utilise l'éclairement d'une ligne de coupe, l'image du profil produite par l'éclairement étant, de part et d'autre d'un plan radial dans lequel se trouve l'image du profil, respectivement saisie par au moins un système optique de production d'image et transmise, par l'intermédiaire d'un dispositif de numérisation, à un dispositif de traitement pour être traitée.

5. Procédé selon la revendication 3 ou 4, caractérisé en ce que, dans une zone de mesure (11), tous les systèmes optiques de production d'image réalisent, selon une succession rapide les uns à la suite des autres, plusieurs prises de vue du profil, qui sont transmises, chacune par l'intermédiaire d'un dispositif de numérisation, au dispositif de traitement qui sélectionne le profil avec le minimum de déformation et en cas de besoin réalise une extrapolation, ou réalise, avec un minimum de déformation, une interpolation entre deux profils.

6. Procédé selon l'une au moins des revendications 1 à 5, caractérisé en ce que l'on utilise un éclairement par ligne de coupe, auquel cas chaque système optique de production d'image effectue au moins deux prises de vue du profil à bref intervalle, l'une à la suite de l'autre, avant de lire les valeurs ainsi obtenues dans le dispositif de numérisation et de les transmettre au dispositif de traitement.

7. Procédé selon l'une au moins des revendications 1 à 6, caractérisé en ce que le profil est éclairé par deux sources d'éclairement (12, 13) qui sont décalées dans la direction de l'axe (14) du train de roues et sont synchronisées.

8. Dispositif pour mesurer automatiquement sans contact le profil des roues (1) de trains de roues de véhicules ferroviaires, comportant au moins un train de roues de véhicules ferroviaires et un dispositif d'éclairement (5) qui contient des moyens optiques pour la production d'une ligne de coupe lumineuse ou d'une arête lumineuse ainsi qu'un système optique de production d'image, et à l'aide duquel la surface périphérique circonférentielle d'une roue à mesurer (1) est au moins partiellement éclairée, étant précisé qu'il est prévu, associés au système optique de production d'image, un dispositif de numérisation et un dispositif de traitement relié à celui-ci, pour la mise en oeuvre du procédé selon l'une des revendications 1 à 7 à l'aide de moyens (15) pour porter le train de roues qui sont conçus comme un rail auxiliaire (15) pour le roulement de chaque roue d'un train de roues sur une section de mesure (2), qui sont raccordés ou aptes à être raccordés à une voie et qui sont conçus et disposés pour que chaque roue d'un train de roues ne roule qu'au niveau de la zone extérieure de la surface de roulement, étant précisé que le dispositif d'éclairement (5) est disposé au-dessous d'un plan de déplacement (10) du rail auxiliaire (15) associé, que l'axe optique du système de production d'image forme, avec les rayons lumineux, orientés au moins approximativement radialement par rapport à la roue, du dispositif d'éclairement, un angle (a, ß) inférieur à 90 mais pas inférieur à 600, qu'il est également prévu des moyens pour positionner des systèmes optiques de production d'image avec un dispositif d'éclairement par rapport à la surface périphérique d'une roue (1), et des moyens pour activer automatiquement le dispositif quand une position de mesure est atteinte, et enfin que le dispositif de traitement est relié à une unité de sortie (16).

9. Dispositif selon la revendication 8, caractérisé en ce qu'au moins le système optique de production d'image peut varier en position pour que le point d'intersection de son axe optique avec le rayon lumineux (19) du dispositif d'éclairement puisse varier, de façon à pouvoir se déplacer sur la surface périphérique de la roue.

10. Dispositif selon l'une au moins des revendications 8 et 9, caractérisé en ce que le système optique de production d'image et le dispositif de numérisation sont des éléments d'un appareil électronique de prise de vues (6-9).

11. Dispositif selon la revendication 8, caractérisé en ce que le dispositif d'éclairement (5) est disposé et conçu de manière à éclairer le profil de la roue (1) suivant un angle aigu par rapport à la direction de déplacement (17) de celle-ci.

12. Dispositif selon la revendication 10 ou 11, caractérisé en ce que le dispositif d'éclairement (5) et l'appareil de prise de vues (6-9) sont montés, réglables, sur un dispositif de support (18), le dispositif d'éclairement et l'appareil de prise de vues pouvant être déplacés par rapport au train de roues.

13. Dispositif selon l'une au moins des revendications 8 à 12, caractérisé en ce que des moyens sont prévus pour guider le rayon lumineux (19) éclairant le profil, verticalement par rapport au plan de déplacement (10) et depuis le bas, en direction du profil.

14. Dispositif selon la revendication 13, caractérisé en ce qu'au-dessous du plan de déplacement (10) pour chaque roue (1), il est prévu un dispositif d'éclairement (5) destiné à produire une ligne de coupe lumineuse avec un rayon lumineux (19) dirigé, dans le plan vertical, vers le profil, auquel cas il est prévu, dans la direction de déplacement (17) de la roue (1) et des deux côtés du rayon lumineux (19), au moins un appareil de prise de vues (6-9) servant à saisir le profil.

15. Dispositif selon l'une au moins des revendications 10 à 14, caractérisé en ce que plusieurs appareils de prise de vues (6, 7, 8, 9) sont réunis pour former des groupes respectifs d'appareils de prise de vues, dont l'un au moins (6, 7) vise directement la ligne de coupe lumineuse ou l'arête lumineuse et dont au moins un autre groupe (8, 9) vise la ligne de coupe lumineuse ou l'arête lumineuse avec interposition d'un dispositif de renvoi (20).

16. Dispositif selon l'une au moins des revendications 10 à 15, caractérisé en ce que tous les appareils de prise de vues (6-9) sont montés fixes au-dessous du plan de déplacement (10).

17. Dispositif selon l'une au moins des revendications 10 à 16, caractérisé en ce qu'il est prévu deux sources d'éclairement (12, 13), qui sont décalées dans la direction de l'axe (14) du train de roues et sont synchronisées.

18. Dispositif selon l'une au moins des revendications 10 à 16, caractérisé en ce qu'il est prévu plusieurs appareils de prise de vues (6-9), dont chacun enregistre une section différente du profil, le système électronique de traitement, relié aux appareils de prise de vues (6-9), comportant des dispositifs (41) destinés à réaliser un traitement préliminaire en parallèle puis à mémoriser temporairement et à traiter en série les signaux des appareils de prise de vues (6-9).

19. Dispositif selon l'une au moins des revendications 10 à 16 et 18, caractérisé en ce que les appareils de prise de vues (6-9) et le dispositif d'éclairement (5) sont montés sur le support (27) de manière à pouvoir être déplacés et positionnés en fonction du diamètre de la roue à mesurer (1).

20. Dispositif selon l'une au moins des revendications 8 à 19, caractérisé en ce que la lumière rayonnée est envoyée aux appareils de prise de vues (6-9) par l'intermédiaire de fibres optiques qui respectent l'image.
